# EUROPEAN PATENT APPLICATION

(11) **EP 3 876 137 A1**
(43) Date of publication of application: **08.09.2021**
(21) Application number: 18938933.1
(22) Date of filing: 30.10.2018
(51) Int. Cl.: G06F 40/20

(54) **SYSTEM FOR IDENTIFYING NAMED ENTITIES WITH DYNAMIC PARAMETERS**

(71) Applicant: Federalnoe Gosudarstvennoe Avtonomnoe Obrazovatelnoe Uchrezhdenie Vysshego Obrazovaniya "Moskovsky Fiziko-Tekhnichesky Institut, Moscow, 117303 (RU)
(72) Inventor: SUVOROV, Vladimir Alexandrovich, St.Petersburg, 192238 (RU)
(74) Representative: Benatov, Samuil Gabriel
(86) International application number: PCT/RU2018/000712
(87) International publication number: WO 2020/091618

(57) **Abstract**

The invention relates to the use of computing systems to extract information from texts in a natural language. The technical result consists in increasing the accuracy of automatic identification of named entities from a text. The claimed system for identifying named entities with dynamic parameters comprises a module for processing original texts in a natural language, a module for determining subject areas of named entities, a decision model module and a module with a set of models for extracting named entities from the text, wherein a text in a natural language is received, said text comprising unlabelled sets of sentences or labelled sets of sentences containing defined types of entities, the obtained text is analysed so as to find parts of the text that contain named entities, the named entities are classified, it is determined which particular model for extracting named entities from among the set of models will identify named entities from the text, and the model selected from the set is launched.

## Description

### FIELD OF INVENTION

This invention relates to extraction of information from natural language texts by means of computing systems, in particular, to the named entity recognition systems with dynamic parameters.

### DESCRIPTION OF THE PRIOR ART

Information extraction is one of the most important operations in automated natural language text processing.

Currently, the task of entity recognition in documents is required in a number of industries.

For instance, in case of legal documents, a contract number, a name of a judge, an applicant, a defendant, an article of the code under which the case is processed, grounds for initiation of a case, and dates need to be extracted; all this information may be used to look for a document or to automatically draw up a template for an appeal to the higher court.

Recognition of such entities as patient's age, illness, medications used, treatment dates, disease prognosis in medical documents may be used to automatically generate a treatment success probability chart.

In the financial sector, by analysing the client's conversation with a financial advisor, after recognition of such entities as client's salary, amount of savings, number of family members, desired investment period, attitude towards particular life situations, a risk profile may be created and a personalised offer can be made to the client.

The term "named entity" was first introduced at the Sixth Message Understanding Conference (MUC-6) in 1996. The MUC-6 and the previous Message Understanding Conferences were devoted to tasks of information extraction: obtaining structured information about companies and war operations from unstructured texts, such as newspaper articles and military reports.

When stating the information extraction problem, it was noted that such information units as a person, an organisation, a location, and numeric expressions containing time, dates, money and percentages shall be recognised. Identification of such entities in texts was recognised as one of the most important subtasks of information extraction, and was described as named entity recognition.

Currently, there is a number of approaches used, each with its own advantages and disadvantages.
- Using entity dictionaries. This approach is convenient when there are few variants of entities and all of them may be described, for instance, you need to find all mentions of a closed list of members of the company's board of directors. This approach provides excellent quality and often requires no context. However, it fails if the entity is not on the list. Entity lists must be maintained and updated as well.
- Ontological/semantic approach. A knowledge graph and a marking of parts of speech are used.
- Neural network approach. By using a large amount of marked data, it is possible to train the system to recognise the marked entities mentioned in the same context. A great amount of data is needed; however, the system allows for recognition of entities of arbitrary size.

Application US20090144609A1 (IPC G06F17/00, G06F17/30, published on 04/06/2009) discloses natural language processing method and system relating to the entities recognition (ERDS). The application describes automatic identification of which objects the text refers to, using natural language processing methods and analysis of information derived from contextual data in the text.

Patent US9619457B1 (IPC G06F17/27, G06K9/00, published on 11/04/2017) discloses a natural language text processing method and, in particular, methods for automatic identification of meaningful objects in documents. This method describes an identification of a set of entities mentions in each abstract and each corresponding document on the basis of their corresponding parts of speech (POS) and dependency analysis.

Application US20140195884A1 (IPC G06F17/21, G06F17/30, published on 10/07/2014) discloses a method for automatic extraction and organisation of information by a processing device from multiple data sources. A pipeline for extraction of information about natural language processing is used for data sources and includes automatic recognition of objects. Information about recognised objects is identified by analysing the products of the natural language processing pipeline. Identified information is grouped in equivalence classes containing equivalent information. At least one mapped representation of equivalence classes is created. An order, in which at least one representation is mapped, is calculated. A combined representation of equivalence classes is produced, which corresponds to the order in which the representation is mapped.

Thus, the solutions known from the prior art and intended for natural language processing are of limited functionality in terms of selection of a certain architecture for entity recognition, and the main disadvantage is that, in known solutions, the learning is carried out by using the semi supervised method, which leads to excessive template generation requiring expert validation for accurate and complete results.

### SUMMARY OF THE INVENTION

The technical problem to be solved by the claimed technical solution is the creation of a system for named entity recognition with dynamic parameters. Also, a significant problem to be solved for this kind of technical solutions is the ability to identify necessary entities of completely different natures from the text, having examples of sentences containing certain entities.

The technical result consists in increased accuracy of automatic determination of named entities in the text.

Named entities (NEs) are objects of a certain type, most often, they are composites, for example, names of organisations, names of people, dates, places, currencies, etc. These categories can be represented by concepts of a predefined or dynamically built ontology.

Examples of named entities:
- personal names: I. Sechin, Ben White;
- geographical names: the river Oka, the city of Moscow;
- names of companies/organisations: RZD (Russian Railways), JSC "Comfort";
- dates and time periods: 03/02/1913, 2 business days;
- telephone numbers: +7(123)456-78-90;
- addresses: 221B Baker Street, London, UK;
- trademarks: Nokia, Apple, Land Rover;
- currency symbols: 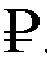 , $, GBP;
- literature references: [2], [Ivanov, 1995];
- genes, proteins, chemical substances: H2N-CH(R)-COOH.

The more complex entities are: a greeting, a farewell, a small talk. An entity may contain any number of words.

Each named entity is an N-gram in the text for which the class is defined. Some examples of named entity classes:
news: persons names, organisations and locations names;
biology: names of proteins, cells.

The preferred embodiment provides for the named entity recognition system with dynamic parameters that contains: a natural language source text processing module, a named entity topic determination module, a decision model module, and a module of named entity extraction model set, at the same time,
the natural language source text processing module is able to:
   - receive natural language texts containing unmarked sets of sentences, or marked sets of sentences containing named entities of a specific type;
   - analyse the obtained text to find the text sections containing the named entities, in particular: the obtained text is divided into sentences, the sentences are semantically analysed, after that, both lemmatisation and stemming of words are performed, while forming an array of words with stopwords and punctuation marks deleted. Words with similar semantic meanings are grouped, and each word gets an assigned value depending on its frequency in the text, and named entities are determined from the groups of words;
the named entity topic determination module is able to: classify the named entities recognised in the text into different topic classes, identify and classify predetermined connections between the entities recognised in the text, and, by an ontological graph, associate the classified named entities with the corresponding entities from an open knowledge base;
the decision model module is able to receive classified topic of named entities, weakly connected topics and words with the largest weight and, by means of the trained neural network model, determine which of the named entity extraction models will recognise the named entities in the text;
and the module of named entity extraction model set launches the model selected from the set to recognise the named entities describing particular objects.

In a particular embodiment, the semantic structure that is a number of semantic structures is represented by a term graph containing a number of nodes (corresponding to a number of semantic classes), and a number of lines (corresponding to a number of semantic relations).

In another particular embodiment, stopwords are determined by the stopword base including prepositions and auxiliary parts of speech.

In another particular embodiment, relationship between the sentences may be strongly connected if topic may overlap, and weakly connected.

In another particular embodiment, an open source library for topic modeling of large collections of text documents (BigARTM) is used to classify topics.

In another particular embodiment, an open knowledge base may be: DBpedia, Freebase, OpenCyc, Wikidata, YAGO, Wordnet.

### BRIEF DESCRIPTION OF THE DRAWINGS

The embodiment of the invention will be described below in accordance with the accompanying drawings, which are presented to explain the essence of the invention and in no way limit the scope of the invention. The application is provided with reference to the following drawings:
Fig. 1 is a general view of the claimed system;
Fig. 2 is a general diagram of a computing device.

### DETAILED DESCRIPTION OF THE INVENTION

Various embodiment details of the present invention will be described in the following detailed description so the preferred embodiment of this invention becomes apparent. However, it shall be obvious to those skilled in the field how the present invention can be used, with or without these embodiment details. In other instances, well-known methods, procedures, and components have not been described in detail so as not to obscure the details of the present invention.

In addition, from the outlined recital it shall be clear that the invention is not limited to the foregoing embodiment. Numerous possible modifications, changes, variations and substitutions that retain the spirit and form of the present invention, shall be obvious to specialists.

The present invention is designed to create a named entity determination system with dynamic parameters.

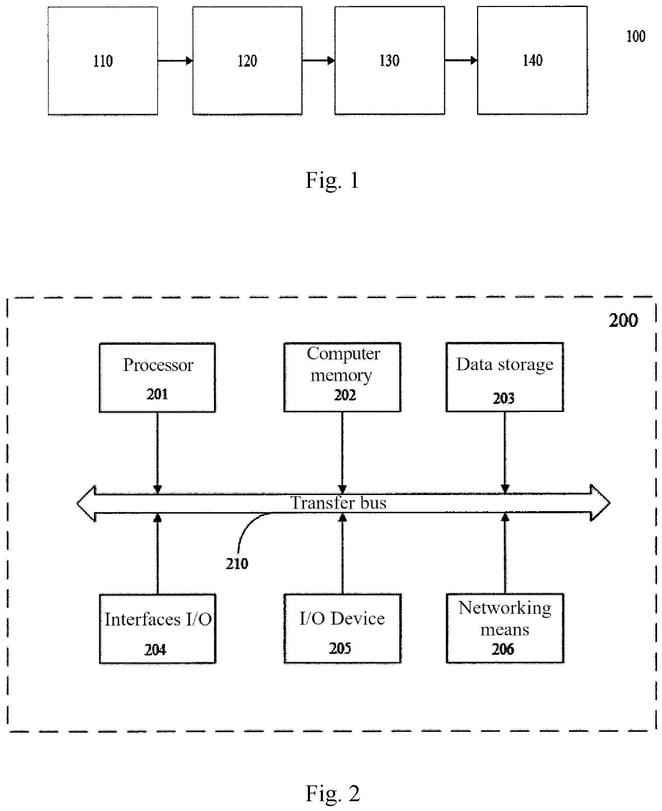

As it shown in Fig. 1, the described system (100) contains a natural language source text processing module (110), a named entity topic determination module (120), a decision model module (130) and a module of named entity extraction model set (140) interconnected with each other.

The natural language source processing module (110) is configured to receive natural language texts containing unlabelled sets of sentences, or labelled sets of sentences containing named entities of a specific type.

Two examples of labelled texts are listed below:

### Example 1:

"[PERSON Bill Gates] is one of the founders of [ORGANISATION Microsoft], a company well-known in [LOCATION USA] and all over the world."

In the first example, named entities (namely words and phrases) are recognised in the text and classified by pre-defined categories, such as:
- individuals - PERSON;
- legal entities - ORGANISATION;
- geographic locations - LOCATION.

### Example 2:

[[Andrew] PER]] have bought [10 [CNT]] [Lego [COM]] parts.

In the second example, named entities (namely words and phrases) are recognised in the text and classified by pre-defined categories, such as:
- individuals - PERSON;
- quantities - CNT;
- companies - COM.

After that, the retrieved text is analysed to determine the parts of the text that contain named entities.

To do so, the retrieved text is divided into sentences, then they are subjected to the semantic analysis. In other words, the meaning of these sentences is determined.

The semantic structure that is a number of semantic structures is represented by a term graph containing a number of nodes (corresponding to a number of semantic classes), and a number of lines (corresponding to a number of semantic relations). Semantic analysis may be based on the elements of the libraries: iPavlov or StanfordNLP.

After that, both lemmatisation and stemming of words are performed, while forming an array of words with stopwords and punctuation marks deleted. Words with similar semantic meanings are grouped, and each word gets an assigned weight depending on its frequency in the text, and named entities are determined from the groups of words.

During the lemmatisation stage, the words in the text are being devolved to their original vocabulary form (infinitive, went -> to go). This stage is performed using dictionaries or by integrating the language rules into the code: for example, determining the part of speech, flection and converting the flection to the required one.

In this case, stopwords are determined by the stopword base including prepositions and auxiliary parts of speech.

During the stemming stage, words are reverted to the stems by cutting off the flection and inflectional suffix.

The grouping of words with similar semantic meaning is performed using the Word2Vec method. Search queries-based Word2Vec performs clustering of words according to the principle of semantic proximity. Namely, it reveals the semantic proximity of words (for example, if the world "Internet" is semantically closer to computer networks, or to outer space). Then words with the similar meaning are located closer to each other.

The TF-IDF or BM25 function is used to assign weight to each word.

TF-IDF function (TF = Term Frequency, IDF = Inverse Document Frequency) is a statistical measure used to assess the importance of a term in the context of the document that is a part of a document collection or corpus. The weight of a word is proportional to the word-usage frequency in a document and is inversely proportional to the word-usage frequency of the same word in all documents of the document collection.

The BM25 function is used to order words in the text by their relevance, namely by word weight.

The named entity subject mapping module (120) is provided with the ability to classify named entities that have been defined in the text into various subject classes, to detect and classify pre-defined relationships between entities that are recognised in the text, and to associate the classified named entities with corresponding entities from the open knowledge base (using an ontology graph).

To classify topics, an open-source library for topic modelling of large collections of text documents (BigARTM) or k-means is used.

Then, using an ontological graph, the classified named entities are associated with the corresponding entities from an open knowledge base. This step is necessary to expand the list of entities and terms transferred to the input of the decision model. Relationships are divided by different degrees of relatedness. Strongly related: when the topics may overlap (for example, as for the topics "Great Politicians" and "Great Warlords"). Weakly related: for example, elephant species and butterfly species. The degree of relatedness is decided by the ontology tree. The ontology graph can be built using WordNet. For example, the word "car" is related to the words "auto", "automobile", "machine", "motorcar" (aBTOMO 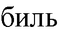 , Ta 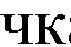 a).

Open knowledge bases include: DBpedia, Freebase, OpenCyc, Wikidata, YAGO, Wordnet

The decision model module (130) is able to receive classified topic of named entities, weakly related topic and words with the largest weight and, by means of the trained neural network model (for example, an multilayer convoluted network with the softmax optimisation feature and 5 layers on neurons), determine which of the named entity extraction models will recognise the named entities in the text.

The module of named entity extraction model set launches the model selected from the set (140) to recognise the named entities describing particular objects.

In Fig. 2 below a general diagram of a computing device (200) is shown that provides the data processing required to embody the claimed solution.

In general, the device (200) includes components, such as: one or more processors (201), at least one computer memory (202), data storage (203), I/O interfaces (204), I/O device (205), and networking means (206).

The processor (201) of the device performs the basic computational operations necessary for the operation of the device (200) or the functionality of one or more of its components. The processor (201) runs the necessary machine-readable commands contained in RAM (202). In particular, the processor (201) can be a CISC microprocessor unit (Complete Instruction Set Computing), a RISC microprocessor unit (Reduced Instruction Set Computer), a VLIW microprocessor unit (Very Long Instruction Word), another instruction set implementing-processor, or processors that implement a combination of instruction sets. The processor (201) may also be one or more special-purpose computing devices, such as ASIC (Application-Specific Integrated Circuit), FPGA (Field-Programmable Gate Array), DSP (digital signal processor), a network processor, etc. The processor (201) is configured to run commands to perform the operations and functions described in this document.

Computer memory (202) is usually the RAM-type and contains the necessary program logic to provide the required functionality.

Data storage (203) can be HDDs, SSDs, RAID array, NAS, flash memory, optical storage devices (CD, DVD, MD, Blue-Ray disks), etc. Data storage (203) allows for long-term storage of various types of information, such as processing history of transaction requests (logs), user IDs, etc.

Interfaces (204) are standard means of connection, e. g. USB, RS232, RJ45, LPT, COM, HDMI, PS/2, Lightning, FireWire, etc.

The choice of interfaces (204) depends on the specific design of the device (200) that can have a form of a personal computer, mainframe, server cluster, thin client, smartphone, laptop, etc.

I/O devices (205) can have a form of a keyboard, joystick, display (touch screen), projector, touchpad, mouse, trackball, light pen, speakers, microphone, etc.

Networking means (206) are selected depending on a device that provides network reception and transmission, such as an Ethernet card, WLAN/Wi-Fi module, Bluetooth module, BLE module, NFC module, IrDa, RFID module, GSM modem, etc. Devices (205) enable data exchange via a wired or wireless data channel, such as WAN, PAN, LAN, Intranet, Internet, WLAN, WMAN or GSM.

The components of the device (200) are interfaced via a common transfer bus (210).

The present claim materials present the preferred disclosure of the implementation of the claimed technical solution, which shall not be used as restrictive for other particular embodiments, which do not go beyond the claimed scope of legal protection and are obvious to specialists in the relevant field of technology.

Certain parts of the description of preferred embodiments are presented in the form of algorithms and symbolic representations of operations with data bits in computer memory. Such descriptions and algorithms representations are the tools used by specialists in the field of data processing to most effectively communicate the essence of their work to others in the field. Within this document and in general, an algorithm is a self-consistent sequence of operations leading to a desired result. Operations require physical manipulation of physical quantities. Generally, although not necessarily, these quantities take the form of electrical or magnetic signals that can be stored, transmitted, combined, compared, or otherwise manipulated. It turned out that for common use it is convenient to characterise these signals in the form of bits, values, elements, symbols, components, numbers, etc.

However, it should be understood that all of these and similar terms should be associated with the corresponding physical quantities, and that they are just convenient labels applied to these quantities. Unless expressly and unambiguously indicated in the following discussion, it should be assumed that throughout the text, the terms such as "determination", "computation", "calculation", "computation", "obtaining", "establishing", "changing", etc., refer to the actions and processes of a computational device or similar electronic computational device that works with data and converts data presented in the form of physical (for example, electronic) quantities in the registers and memory of the computational device into other data similarly presented in the form of physical quantities in memory or registers of a computational device, or other similar storing, transmitting or displaying devices.

It should be understood that the above description is intended to illustrate, not to restrict. Various other embodiments will become apparent to a skilled person upon reading and understanding the above description. Therefore, the scope of the disclosure is to be determined by referencing the claim attached hereto and the full scope of equivalents to which such claims confer a right.

## Claims

1. A system for identifying named entities with dynamic parameters that comprises: a natural language source text processing module, a named entity topic determination module, a decision model module, and a module of named entity extraction model set, wherein,
the natural language source text processing module is able to:
- receive natural language texts containing unmarked sets of sentences, or marked sets of sentences containing named entities of a specific type;
- analyse the obtained text to find the text sections containing the named entities, in particular: the obtained text is divided into sentences, the sentences are semantically analysed, after that, both lemmatisation and stemming of words are performed, while forming an array of words with stopwords and punctuation marks deleted. Words with similar semantic meanings are grouped, and each word gets an assigned value depending on its frequency in the text, and named entities are determined from the groups of words;
the named entity topic determination module is able to: classify the named entities recognised in the text into different topic classes, identify and classify predetermined connections between the entities recognised in the text, and, by an ontological graph, associate the classified named entities with the corresponding entities from an open knowledge base;
the decision model module is able to receive classified topic of named entities, weakly related topics and words with the largest weight and, by means of the trained neural network model, determine which of the named entity extraction models will recognise the named entities in the text;
and the module of named entity extraction model set launches the model selected from the set to recognise the named entities describing particular objects.

2. The system according to claim 1, **characterized in that** a semantic structure that is a number of semantic structures is represented by a term graph containing a number of nodes, corresponding to a number of semantic classes, and a number of lines, corresponding to a number of semantic relations.

3. The system according to claim 1, **characterized in that** stopwords are determined by the stopword base including prepositions and auxiliary parts of speech.

4. The system according to claim 1, **characterized in that** a TF-IDF or BM25 function is used to assign weight to each word.

5. The system according to claim 1, **characterized in that** relationship between the sentences may be strongly related, if topics may overlap, and weakly related.

6. The system according to claim 1, **characterized in that** an open-source library for topic modelling of large collections of text documents (BigARTM) is used to classify topics.

7. The system according to claim 1, **characterized in that** an open knowledge base can be one of the following: DBpedia, Freebase, OpenCyc, Wikidata, YAGO, Wordnet.
